# EUROPEAN PATENT APPLICATION

(11) **EP 2 422 889 A1**
(43) Date of publication of application: **29.02.2012**
(21) Application number: 10173870.6
(22) Date of filing: 24.08.2010
(51) Int. Cl.: B08B 1/00, B08B 3/02

(54) **Cleaning device for solar panels**

(71) Applicant: Solar Clean VOF, 1930 Zaventem (BE)
(72) Inventor: Zijlstra, Jelle, 1930, Zaventem (BE)
(74) Representative: BiiP cvba

(57) **Abstract**

The present invention concerns a cleaning device (1) for cleaning a series of tilted solar panels aligned in a row, said device comprising:
• A supporting frame (2) defining a cleaning plane (2A), on which are mounted:
• Cleaning means (4) suitable for cleaning a surface parallel to the cleaning plane (2A);
• Driving means (9) for driving the motion of the cleaning device along a row of solar panels,
• Guiding means (3) for guiding the motion of the cleaning device along a row of solar panels, wherein, the guiding means (3) comprise,
• at least two, preferably at least three separate guiding wheels (3A), which are aligned along a straight line parallel to the cleaning plane and adjacent to one edge of the frame (2), each guiding wheel (3A) being mounted such as to rotate about an axis substantially normal to the cleaning plane (2A).

## Description

### Technical Field

The present invention relates to a device for cleaning solar panels. In particular, it concerns a motorized device for cleaning a series of aligned solar panels forming rows, which are tilted with respect to the horizontal and requiring no particular superstructure for its guiding along a row.

### Background for the invention

Most States have committed to use green energy to satisfy a given fraction of their total power consumption, in order to reduce the emission of greenhouse gases. For this reason, the number of solar panels has increased substantially in the last years, even in Northern European countries not particularly known for being sunny. These panels can be found on the roofs of individual houses with an exposed area of a few square metres, as well as on larger solar panels farms exposing surface areas of dimensions which can vary substantially, from the covering of the roof of a building or a large warehouse with a few rows of solar panels, to entire fields covered with rows and rows of solar panels. In order to optimize the exposure of the solar cells to solar radiations, the solar panels are usually exposed with an angle with respect to the horizontal. In individual houses, the roof is already sloped and the solar panels are usually mounted parallel to the slope of the roof. In solar panels farms, on the other hand, the solar panels usually rest on a substantially horizontal surface and are arranged in a series of usually parallel rows where the panels are arranged side by side, with an angle with respect to the horizontal and separated from the rows in front and on the back by a distance sufficient to prevent the projected shadow of the panels of the front row to be cast onto the panels of the adjacent back row at the peak hours of sun radiation. The tilting angle may vary from about 5 to 10 degrees to up to 45 degrees. Tilting angles of between 30 and 40 degrees are usually considered as optimal, in particular in Northern Europe countries.

In all cases the solar panels must be cleaned in order to not decrease the intensity of the solar radiation reaching the solar cells. If a few square meters of panels covering the roof of a private house may be cleaned manually, this is not practical when the area of solar panels increases substantially. Automatic cleaning devices for cleaning a series of solar panels aligned in rows have been proposed in the art.

Automated cleaning systems for cleaning solar panels are described in US2010/0043851 and in httr)://www.gizrriag.corn/heliotex-solar-panel-cleariirig/11009/, wherein spraying nozzles are disposed at different places in a row or an array of solar panels. This cleaning systems do not comprise any means for wiping, brushing, or scrubbing hard adhering dust and dirt off the surface of the panels, and the cleaning of the panels is therefore not optimal.

Cleaning robots are sometimes used for cleaning solar panels. Their mobility is often rather slow and the passage from one panel to another is possible only when the alignment between the two panels is very good. These robots are therefore limited, at least to date, to the cleaning of rather small areas of solar panels. Examples of such robots can be found e.g., in httr)://www.youtLibe.com/watch?v=HZipNTksdqAshowing a so called gecko, or in http//www.youtube.com/watch?v=OjFbQ63Aryg. Many other examples of such cleaning robots can be found on internet.

Several solutions for cleaning rows of solar panels comprise a moving cleaning device suitable for moving along the direction of the row and guided by two rails situated on top and at the bottom of the solar panels and running all along the length of the row of solar panels. In some cases, the cleaning device can move along a rail normal to the two guiding rails, to clean the whole surface of the panels, or the cleaning device spans over the whole height of the solar panel and moves only in one direction parallel to the guiding rails. Examples of such systems can be found e.g., in JP2002/273351, KR2009/0058624, CN201 111 305, or KR2009/0090722. These systems work well but require a superstructure comprising two rails running along the whole length of each row of solar panels. This involves of course an additional cost, but is also in some cases not practical, in particular when rows of solar panels are disposed on a surface which is not perfectly flat or hindered with obstacles such as on the flat roof of buildings, wherein pipes, steps, cables, and the like are so many obstacles to the good alignment of the panels.

It can be seen from the above review of the prior art that it remains a need for a cleaning system for cleaning rows of various dimensions of aligned solar panels, that allows scrubbing of hard adhering dirt, which is faster than most cleaning robots available to date on the market, which requires no additional superstructure like guiding rails, and which can account for light misalignments of the rows. The present invention provides a solution meeting all the above requirements;

### Summary of the invention

The present invention is defined in the appended independent claims. Preferred embodiments are defined in the dependent claims. In particular, the present invention concerns a cleaning device for cleaning a series of tilted solar panels aligned in a row, said device comprising:
- A supporting frame defining a cleaning plane, on which are mounted:
- Cleaning means suitable for cleaning a surface parallel to the cleaning plane;
- Driving means for driving the motion of the cleaning device along a row of solar panels,
- Guiding means for guiding the motion of the cleaning device along a row of solar panels, wherein the guiding means comprise,
- At least two, preferably at least three separate guiding wheels, which are aligned along a straight line parallel to the cleaning plane and adjacent to one edge of the frame, each of the at least three wheels being mounted such as to rotate about an axis substantially normal to the cleaning plane.

The cleaning means preferably comprise at least one rotating brush or cloth suitable for cleaning a surface parallel to the cleaning plane, and extending preferably over the whole length of the frame such as to span over the whole height of a solar panel. A squeegee can also be provided.

In order to keep the supporting frame at a given distance from the surface of the solar panel to be cleaned, the cleaning device of the present invention preferably comprises at least three non aligned holding wheels mounted on the same side of the supporting frame as the cleaning means and suitable for rotating about an axis parallel to the cleaning plane and normal to the line formed by the at least three driving wheels, such as to allow the motion of the cleaning device along a row of solar panels. The motion of the cleaning device is preferably driven by motorized guiding wheels and/or motorized holding wheels.

The cleaning device of the present invention preferably comprises sprinkling means for spraying a liquid onto a surface parallel to the cleaning surface, Since the device can preferably run indifferently along a row from left to right or from right to left, it is preferred if sprinkling means are arranged on either side of the cleaning means (4), in particular on either side of the brushes. The sprinkling means can be connected to a source of pressurized liquid, such as water, if available close by, or the device may comprise a mobile source of pressurized liquid, as well as of power, which may be mounted on a lorry.

Since the cleaning device of the present invention is meant to clean the whole exposed surface of the solar panels it can additionally be used for scanning and monitoring said surface. For instance, by mounting an infrared camera on the support structure, temperature gradients on the surface of the solar panels can be identified and located, indicative of a malfunctioning of a cell in case, e.g., of a hot spot.

The present invention also concerns a method for cleaning tilted solar panels arranged on at least one row, comprising the following steps:
- Hanging a device according to the present invention on the upper edge of a tilted solar panel, such that the guiding means rest on said upper edge, and such that the cleaning means are in cleaning contact with the surface of said solar panel;
- Connecting the device to a source of power and optionally to a source of pressurized liquid;
- Activating the cleaning means and the driving means such as to drive the cleaning device along the row of tilted solar panels, letting it be guided by the guiding means following the upper edges of the subsequent solar panels in the row. It is preferred that the device comprises at least three guiding wheels so that at least two of the at least three guiding wheels are always in contact with the upper edge of at least one solar panel.

The cleaning method preferably comprises connecting the device to a source of pressurized liquid and,
- spraying liquid onto the surface of a solar panel upstream from the advancing device,
- rubbing the wet surface of said solar panel, preferably with rotating brushes or clothes,
- spraying a rinsing liquid onto the surface of the rubbed solar panel downstream of the advancing device, and
optionally removing the rinsing liquid from the surface of the solar panel with a squeegee.

### Brief description of the Figures

For a fuller understanding of the nature of the present invention, reference is made to the following detailed description taken in conjunction with the accompanying drawings in which:

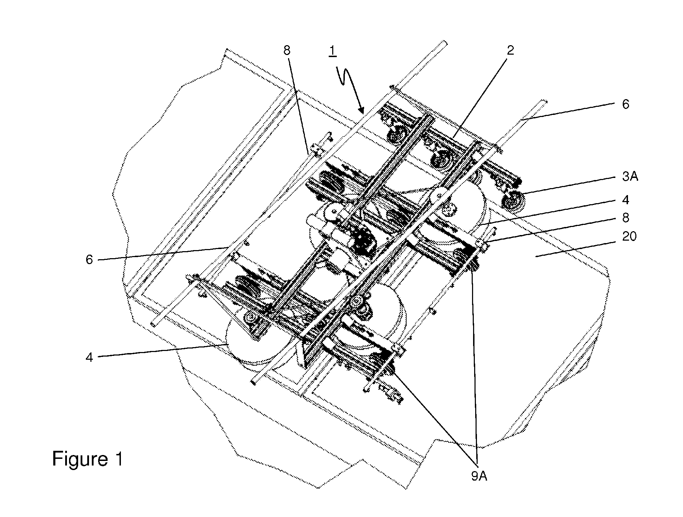

Figure1 : shows a perspective view of an embodiment of cleaning device according to the present invention, in cleaning position on a tilted solar panel,

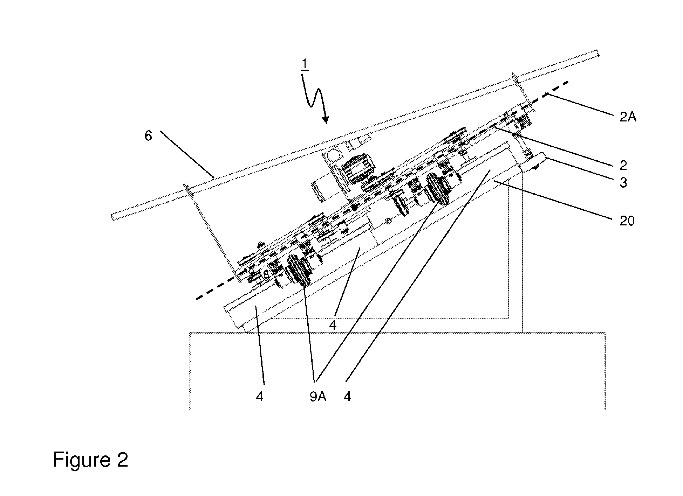

Figure 2; shows a side view of the length of the cleaning device resting on a tilted solar panel.

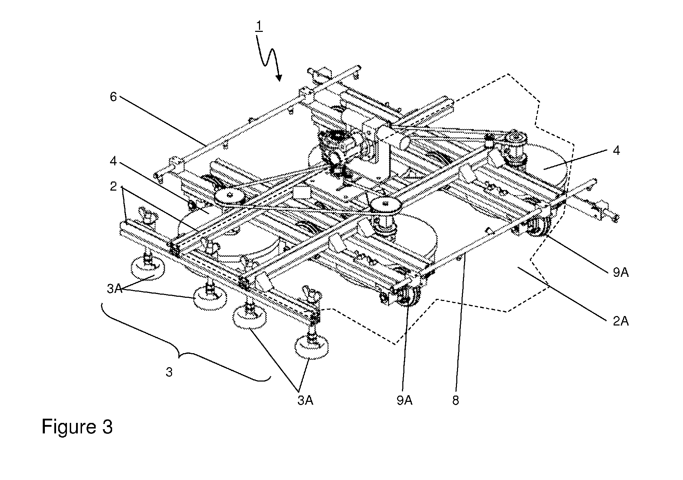

Figure 3: shows a perspective view of the cleaning device of Figure 1.

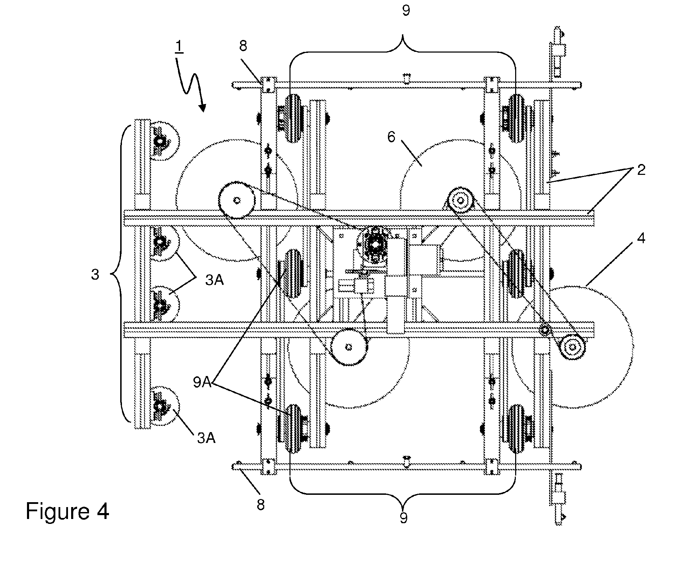

Figure 4: shows a top view of the cleaning device of Figure 1.
Figure 5: shows a side view of the cleaning device of Figure 1 showing the guiding means.

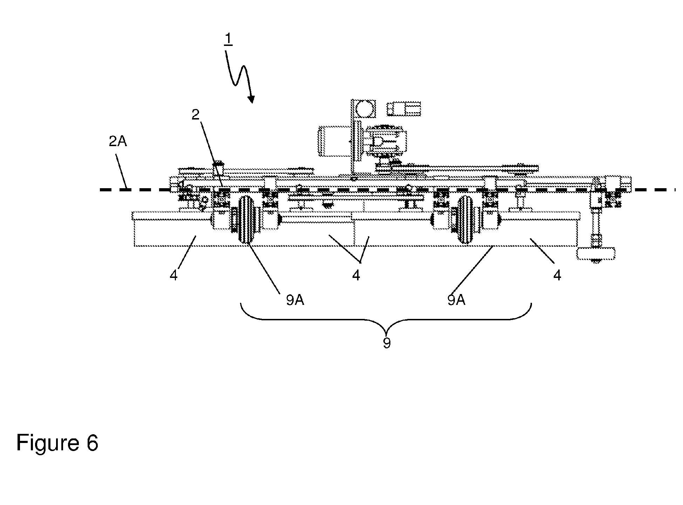

Figure 6: shows a side view of the cleaning device of Figure 1 showing the driving means.

### Detailed description of the invention

The present invention concerns a cleaning device particularly suitable for cleaning solar panels (20) disposed in rows of any length, even if the panels are not perfectly aligned, and requiring no permanent equipment in place nor any particular superstructure, like guiding rails, fixed water supply, fixed power supply, and the like. As illustrated in the Figures, the cleaning device (1) of the present invention comprises:
- A supporting frame (2) defining a cleaning plane (2A), on which are mounted:
- Cleaning means (4) suitable for cleaning a surface parallel to the cleaning plane (2A);
- Driving means (9) for driving the motion of the cleaning device along a row of solar panels,
- Guiding means (3) for guiding the motion of the cleaning device along a row of solar panels,

Characterized in that, the guidingmeans (3) comprise,
- at least two, preferably at least three separate guiding wheels (3A), which are aligned along a straight line parallel to the cleaning plane and adjacent to one edge of the frame (2), each guiding wheel (3A) being mounted such as to rotate about an axis normal to the cleaning plane (2A).

In the context of the present invention, the term "wheel" is meant to encompass any rotating device allowing the transformation of a rotating movement into a linear movement, such as a rotating wheel, roller, gear, pin, and the like. The cleaning device of the present invention actually hangs on the upper edge of the solar panels, with the guiding wheels (3A) resting on said upper edge. This is possible even at low tilting angles of the solar panels with respect to the horizontal of the order of 5 to 10 degrees, but is most secure of course with greater tilting angles of the order of 20 to 40 degrees, preferably of 30-38 degrees. In the embodiment wherein the the guiding means (3) comprise at least three guiding wheels (3), there are always two wheels in contact with one or two solar panels during passage from one solar panel to the next one in the row, which ensures the stability of the device at any time. This system accounts for small defects in the alignment of the solar panels, which may often occur when the panels are disposed on an area not specifically designed for the purpose, such as a flat roof of a building, loaded with conduits, cables, and the like. It is very advantageous since it does not require the pre-installation of any type of superstructure like guiding rails disposed both on top and at the bottom of the rows of solar panels, as often used in automatic cleaning devices in the art, said rails being of course detrimental to the cost of the installation.

To enhance the stability of the cleaning device in operation, it is preferred that the outer edge of the at least three wheels (3A) is profiled to match the geometry of the upper edge of a solar panel. This reduces any risk of slippage of the device off a panel. In case the guiding wheels (3A) are motorized, they may be connected to one another by a flexible sling to form a caterpillar. Such caterpillar allows the device to account for greater defects in the alignment of the solar panels in a row. The caterpillar is preferably profiled such as to reduce any risk of slippage off a panel.

The cleaning means (4) may comprise any means known in the art for cleaning a flat glass surface. They may include a source of liquid or not. For example, the cleaning means may comprise blasting means of a particulate matter suitable for cleaning the surface of a solar panel, but it preferably comprises brushes, clothes, and the like, more preferably rotating brushes and/or clothes suitable for sweeping the surface of the solar panels at high velocity as illustrated in the Figures. The brushes or clothes may work in dry conditions to remove principally dust from the surface of the panels, but it is preferred to work in wet conditions. In the latter case, a squeegee in replacement of, or in addition to the brushes and/or clothes, may help to remove the cleaning liquid. Working in wet conditions can be done by providing the cleaning device with sprinkling means (8), oriented to spray a liquid onto the surface of the panels. Since the cleaning device (1) of the present invention should ideally work equally well when running along a row of solar panels from left to right, as from right to left, it should preferably comprise brushes and/or clothes disposed in the middle section of the structure spanning the whole length of the structure (2), which should optimally cover the whole height of a panel, with sprinkling means (8) and squeegees disposed on either sides of the brushes. This way, an array of tilted solar panels arranged in a series of subsequent rows can be cleaned by running a device of the present invention in one direction for the first, third, and all subsequent odd rows, and in the opposite direction for the second, fourth, and all subsequent even rows, thus defining a cleaning circuit forming a serpentine. The circuit is not continuous, since at the end of each row, the device must be withdrawn from the last solar panel of the row which has just been washed and mounted on the first panel of the next row to be washed, which is generally standing directly in front or behind the last panel washed. To facilitate handling of the device, at least one handle (6) may be fixed to the frame (2) for holding and handling the device (1). It is preferably fixed to the upper side of the supporting frame (2) corresponding to the side where the guiding means (3) are located, but extending in the opposite direction with respect to the cleaning plane (2A). It may be advantageous for cleaning devices of larger dimensions to provide a second handle (6) at the bottom of the supporting frame (i.e., side opposite the one comprising the guiding means (3)).

In order to maintain the supporting structure (2) of the device at a distance from the surface of the solar panels to be cleaned and thus to avoid scratching thereof, the cleaning device of the present invention may comprise at least three non aligned holding wheels (9A) mounted on the same side of the supporting frame (2) as the cleaning means (4) and suitable for rotating about an axis parallel to the cleaning plane (2A) and normal to the line formed by the at least three driving wheels (3A) to support the frame at a given distance from a solar panel it rests upon, such that the cleaning means (4) are in cleaning contact with the surface thereof. The orientation of the holding wheels (9A) is such that they follow the lateral motion of the cleaning device along a row of solar panels. Using holding wheels (9A) has the advantage of keeping the cleaning means (4) in optimal cleaning contact with the surface of the solar panels, and of avoiding any scratching of the surface. At least three non aligned holding wheels (9A) ensure the stability of the supporting frame (2), but it is clear that more holding wheels (9A) can be used, provided they are well aligned on a plane. The outer edge of the holding wheels preferably comprises a soft material, such as a rubber or a polyolefin (e.g., PE, PP), POM, PTFE and the like, to preserve the integrity of the surface of the solar panels. The axis of rotation of the holding wheels (9A) may be fixed with an orientation normal to the line defined by guiding wheels (3A), or may be allowed to freely rotate around an axis normal to the cleaning plane. In case the holding wheels (9A) are idle, the latter solution is preferred, but in case the holding wheels (9A) are motorized, it is preferred to keep their orientation fixed, to prevent any inadvertent jump of the device off course. In order to accommodate solar panels having frames of different thicknesses and depths, it is advantageous to provide the cleaning device of the present invention with means for easily varying the distance of the guiding wheels (3A) from the frame (2). Indeed, when the supporting frame (2) is maintained at an optimal constant distance from the surface of a solar panel by the holding wheels (9A), the guiding wheels (3A) must fit exactly to match the top edge of the solar panel frame. Depending on the model of solar panels to be washed, the design of the frame may vary substantially in thickness, in depth, it could be in recess or, on the contrary, overhanging over the surface of the solar panel to protect it from direct dripping, and so on. For this reason, each guiding wheel (3A) is preferably mounted at one end of a rod extending normal to the cleaning plane (2A) and mounted such as to allow the variation of the distance of said rod end from the cleaning plane (21). For example, a threaded rod engaging in a matching threaded orifice can be used. Alternatively, a smooth rod is engaged in an orifice provided with means for alternatively holding tight the rod into position or letting it run loosely. Any other means known in the art for varying the distance of a wheel from a support structure can be implemented in the device of the present invention.

The motion of the cleaning device (1) of the present invention is driven by driving means (9), which allow the cleaning to be performed automatically. Preferably, the driving means (9) comprise motorized guiding wheels (3A), and/or motorized holding wheels (9A). The embodiment illustrated in the Figures comprises six motorized holding wheels (9A) and three idel wheels (3A). As discussed above, in case the guiding wheels (3A) are motorized, it may be advantageous to connect them with a caterpillar. It is preferred that the velocity of the driving means (9) can be controlled independently from the rotational velocity of the cleaning means (4). This can be done by driving them by two separate motors, which is easy to control, but also more expensinve. Alternatively, a single motor may be used to drive both the cleaning means (4) and the driving means (9) with a gear box allowing separate control of their respective velocities.

The cleaning device of the present invention can advantageously be used in a method for cleaning tilted solar panels arranged on at least one row, comprising the following steps:
- Hanging a device (1) according to the present invention on the upper edge of a tilted solar panel, such that the guiding means (3) rest on said upper edge, and such that the cleaning means are in cleaning contact with the surface of said solar panel;
- Connecting the device (1) to a source of power and optionally to a source of pressurized liquid, preferably water;
- Activating the cleaning means (4) and the driving means (9) such as to drive the cleaning device along the row of tilted solar panels, letting it be guided by the guiding means (3) following the upper edges of the subsequent solar panels in the row. It is preferred that the guiding means (3) comprise at least three guiding wheels (3A) so that at least two of the at least three guiding wheels (3A) are always in contact with the upper edge of at least one solar panel.

A device of the present invention comprising at least three guiding wheels (3A) preferably comprises safety means triggering the stopping of the motor driving the motion of the cleaning device (1) in case two of the at least three guiding wheels (3A) are unloaded. As discussed above, in use two of the at least three guiding wheels (3) are permanently in contact with the edge of one or two solar panels, and support the whole weight of the cleaning device resting on the tilted surface of a solar panel. When the cleaning device reaches the end of a row, or if two panels in a row are too distant from one another, or misaligned to a point that the cleaning device cannot ensure a continuous path, the cleaning device may end up holding to the upper edge of a solar panel by a single guiding wheel (3A), the other two being unloaded in contact with no solid structure. In this case, the safety feature would immediately stop the motion of the cleaning device to prevent it from falling to the ground. In case the device comprises more than three wheels, the safety device may be programmed for stopping the motor when a given number of guiding wheels are unloaded. The safety feature may also be programmed to activate the driving motor in a reverse direction to attempt to re-establish the contact of the last unloaded wheel with the upper edge of a solar panel.

Since the cleaning device of the present invention is meant to clean the whole exposed surface of the solar panels it can additionally be used for scanning and monitoring said surface. An infrared camera could for instance be used to identify hot spots indicative a malfunctioning solar cell. Other monitoring instruments can be mounted to measure different parameters, such as electromagnetic fields, rugosity, and the like.

To enhance the cleaning performance of the present cleaning device, it is preferred to connect the device to a source of pressurized liquid and to:
- spray liquid onto the surface of a solar panel upstream from the advancing device (1),
- rub and wipe the soaped surface of said solar panel, preferably with rotating brushes or clothes,
- spray a rinsing liquid onto the surface of the rubbed solar panel downstream of the advancing device (1), and
- optionally remove the rinsing liquid from the surface of the solar panel with a squeegee.

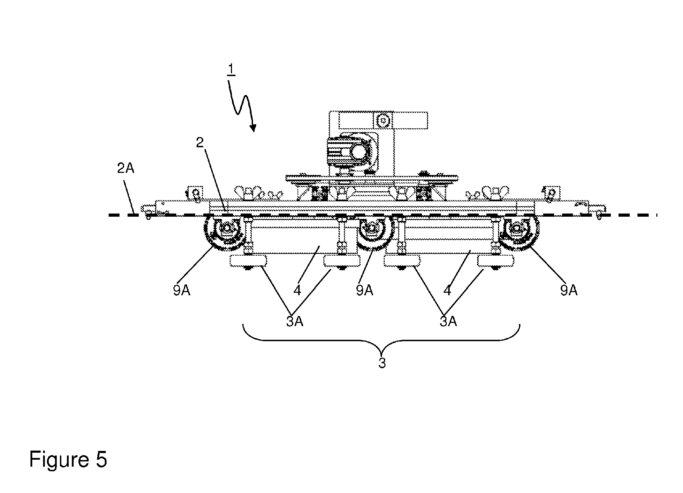

As discussed above, cleaning of the solar panels in wet conditions may be achieved by providing the cleaning device with sprinkling means (8) for sprinkling a liquid, such as soaped water and/or clear water, onto a surface parallel to the cleaning surface, said sprinkling means (8) being preferably disposed in two rows of sprinklers running parallel to the length of the device, and on either sides of the washing means (4), so as to allow the use of the cleaning device in both directions of motion along a row of solar panels. Such embodiment is well illustrated in Figure 5.

Paradoxically, although solar panels produce power, a source of power is not always readily available in the vicinity of the solar panels to power the cleaning device. Similarly, a source of pressurized liquid is not always available for wet cleaning applications. To solve this problem, it may be advantageous to provide a mobile source of power and/or a mobile source of pressurized liquid to permit the automatic cleaning of solar panels even in places devoid of any source of power or liquid. The mobile sources of power and pressurized liquid may be loaded on a lorry and connected to the cleaning device by a cable for the power and by hoses for the liquid. The cables and hoses may be of considerable length in cases such as when solar panels are arranged on top of a building of considerable height, or when they are arranged in rows of considerable length.

## Claims

1. A cleaning device (1) for cleaning a series of tilted solar panels (20) aligned in a row, said device comprising:
• A supporting frame (2) defining a cleaning plane (2A), on which are mounted:
• Cleaning means (4) suitable for cleaning a surface parallel to the cleaning plane (2A);
• Driving means (9) for driving the motion of the cleaning device along a row of solar panels,
• Guiding means (3) for guiding the motion of the cleaning device along a row of solar panels,
**Characterized in that**, the guiding means (3) comprise,
• at least two, preferably at least three separate guiding wheels (3A), which are aligned along a straight line parallel to the cleaning plane and adjacent to one edge of the frame (2), each guiding wheel (3A) being mounted such as to rotate about an axis substantially normal to the cleaning plane (2A).

2. Device according to claim 1, wherein the outer edge of the at least three wheels (3A) is profiled to match the geometry of the upper edge of a solar panel.

3. Device according to any of the preceding claims, wherein the cleaning means (4) comprise at least one rotating brush or cloth suitable for cleaning a surface parallel to the cleaning plane (2A), preferably the cleaning means (4) extend over the whole length of the frame (2) such as to span over the whole height of a solar panel.

4. Device according to any of the preceding claims, wherein the cleaning means (4) comprise at least one squeegee.

5. Device according to any of the preceding claims, further comprising at least three non aligned holding wheels (9A) mounted on the same side of the supporting frame (2) as the cleaning means (4) and suitable for rotating about an axis parallel to the cleaning plane (2A) and normal to the line formed by the at least three driving wheels (3A) to support the frame at a given distance from a solar panel it rests upon, such that the cleaning means (4) are in cleaning contact with the surface thereof.

6. Device according to any of the preceding claims, wherein the driving means (9) comprise motorized guiding wheels (3A), and/or motorized holding wheels (9A).

7. Device according to the preceding claim, wherein the at least three wheels (3A) are motorized and connected to each other by a flexible sling, forming a caterpillar.

8. Device according to any of claims 3 to 7, wherein the velocity of the driving means (9) can be controlled independently from the rotational velocity of the cleaning means (4), by driving them, either by two separate motors, or by a single motor with a gear box.

9. Device according to any of the preceding claims, wherein the distance of the guiding wheels (3A) from the frame (2) can be varied easily.

10. Device according to any of the preceding claims, further comprising fixed to the frame (2):
• a camera, preferably an IR camera, and/or
• at least one handle (6) for holding and handling the device (1)

11. Device according to any of the preceding claims, further comprising sprinkling means (8) for sprinkling a liquid onto a surface parallel to the cleaning surface, said sprinkling means (8) being preferably disposed in two rows of sprinklers running parallel to the length of the device, and on either sides of the washing means (4).

12. Device according to any of the preceding claims, comprising at least three guiding wheels (3A) and further comprising safety means triggering the stopping of the motor driving the motion of the cleaning device (1) in case two of the at least three wheels (3A) are unloaded.

13. Device according to any of the preceding claims, further comprising a mobile source of pressurized liquid, and/or a mobile source of power, either or both being preferably mounted on a lorry.

14. Method for cleaning tilted solar panels (20) arranged on at least one row, comprising the following steps:
• Hanging a device (1) according to any of the preceding claims on the upper edge of a tilted solar panel (20), such that the guiding means (3) rest on said upper edge, and such that the cleaning means are in cleaning contact with the surface of said solar panel;
• Connecting the device (1) to a source of power and optionally to a source of pressurized liquid;
• Activating the cleaning means (4) and the driving means (9) such as to drive the cleaning device along the row of tilted solar panels, letting it be guided by the guiding means (3) following the upper edges of the subsequent solar panels in the row.

15. Method according to the preceding claim wherein the device is connected to a source of pressurized liquid and further comprising the following steps:
• spraying a liquid onto the surface of a solar panel upstream from the advancing device (1),
• rubbing the wet surface of said solar panel, preferably with rotating brushes or clothes,
• spraying a rinsing liquid onto the surface of the rubbed solar panel downstream of the advancing device (1), and
• optionally removing the rinsing liquid from the surface of the solar panel with a squeegee.
